# EUROPEAN PATENT SPECIFICATION

(11) **EP 1 495 957 B1**
(45) Date of publication and mention of the grant of the patent: **28.11.2007**
(21) Application number: 04076966.3
(22) Date of filing: 07.07.2004
(51) Int. Cl.: B62M 7/02, B62K 11/04

(54) **Coupling system between frame and engine group of a motor vehicle**
Kopplung zwischen Rahmen und Motor eines Motorfahrzeugs
Dispositif de couplage entre cadre et moteur d'un vehicule motorisé

(30) Priority: 09.07.2003 IT mi20031400
(43) Date of publication of application: 12.01.2005
(73) Proprietor: PIAGGIO & C. S.p.A., 56025 Pontedera (Pisa) (IT)
(72) Inventor: Bagnoli, Alessandro, 56030 Perignano Di Lari (Pisa) (IT)
(74) Representative: De Gregori, Antonella

(56) References cited:
- JP-A- 56 013 266
- JP-A- 62 039 389
- US-A- 2 950 625
- US-A- 3 542 146
- US-A- 3 722 612
- US-A- 4 412 597
- US-A- 4 487 285

## Description

The present invention concerns a coupling system between frame and engine group of a motor vehicle.

In greater detail, the invention concerns a system of the aforementioned type, studied and realised in particular for reducing the passage of the vibrations produced for example by an internal combustion engine, and the torsional effects with respect to the vertical plane of a motorcycle, but which can be used for any system or means equivalent to the one indicated.

Hereafter, the description shall be aimed at application on a scooter, but it is clear how it must not be considered limited to this specific use.

It is well known that currently the performance of propellants of motorcycles and scooters in particular is increasing rapidly. This implies the need to foresee, at the design stage, particular attention in equipping motorcycles with systems capable of ensuring comfort in riding, therefore reduction in vibrations, and the safety of the rider.

Currently, devices are known that allow the damping of vibrations, such devices comprising mechanical articulations such as oscillating arms, placed between engine group and frame.

The presence of such devices does not, however, allow an effective block in the passage of vibrations from the engine group to the frame due to the increased propulsive power.

Current systems also require positioning of the engine group set back with respect to the centre of the vehicle and, consequently, imply the occurrence of turning torques due to the non-barycentric distribution of the weight forces.

It is also known how the fundamental parts of a motorcycle, i.e. the engine group, the driving-wheel with the relative suspension, and the frame, are stressed independently and that it would therefore be suitable, as well as to lessen the propagation of vibrations from the engine to the frame, also to make the overall structure equipped with adequate rigidity, which allows the torsional stresses to which the various parts of the motorcycle are subjected to be reduced.

Document JP 62 039389 A discloses a motor vehicle according to the preamble of claim 1 with a coupling system between the frame and the engine group, said coupling system comprising at least two connection groups between said frame and said engine group.

Also, documents US 4 487 285 A, US 4 412 597 A, US 2 950 625 A and JP 56 013266 A disclose coupling systems between the frame and the engine group of a motor vehicle wherein the connection groups are located in a plurality of different position with respect to the engine.

In light of the above, there is clearly a need to be able to have a system, like the one according to the present invention, that allows a coupling between frame and engine group to be created, which minimises the propagation of vibrations and which, simultaneously, increases the rigidity of the means with respect to its vertical plane.

Therefore, the purpose of the present invention is that of solving the problems of the prior art providing a motor vehicle having a coupling system between engine group and frame that allows the passage of vibrations between frame and engine group to be effectively reduced.

Another purpose of the present invention is that of allowing the installation of the engine group in a central position with respect to the vehicle, instead of a position set back towards the rear as current designs foresee.

Finally, a further purpose of the present invention is that of realising a motor vehicle having a coupling system between engine group and frame that is simple and cost-effective to construct.

These and other purposes are accomplished by the motor vehicle having a coupling system according to the present invention that has the characteristics of the attached claim 1.

Further characteristics and advantages of the present invention shall become clearer following the present description, given for indicating and not limiting purposes, with reference to the attached drawings, in which:
figure 1 shows a side view from the right of a scooter or motor vehicle equipped with the coupling system according to the present invention;
figure 2 is a view from above of the engine group of the scooter of figure 1;
figure 3 is an enlarged side view from the left of a detail of a rear connection group;
figure 4 is an enlarged side view from the right of the opposite rear connection group with respect to that of figure 3;
figure 5 is an enlarged side view from the left the front connection group;
figure 6 is a view from above, partially in section, of a second embodiment of the front connection group;
figure 7 is a view from above, partially in section, of a third embodiment of the front connection group;
Figure 8 is a side view from the right of an alternative embodiment of the rear and front connection groups, respectively; and
figure 9 is a view from above of the connection groups shown in figure 8 fixed, according to the present invention, on an engine group.

With reference to the attached figures it is possible to see an engine group 1 of a scooter, comprising the solution of the present invention.

The engine group 1 is connected to the frame 2 by means of two rear connection groups 3, 4 and a front connection group 5.

The rear connection groups 3, 4 are arranged laterally to the crankcase 8 of the engine group 1 in a corresponding position, but on opposite sides of the crankcase itself 8.

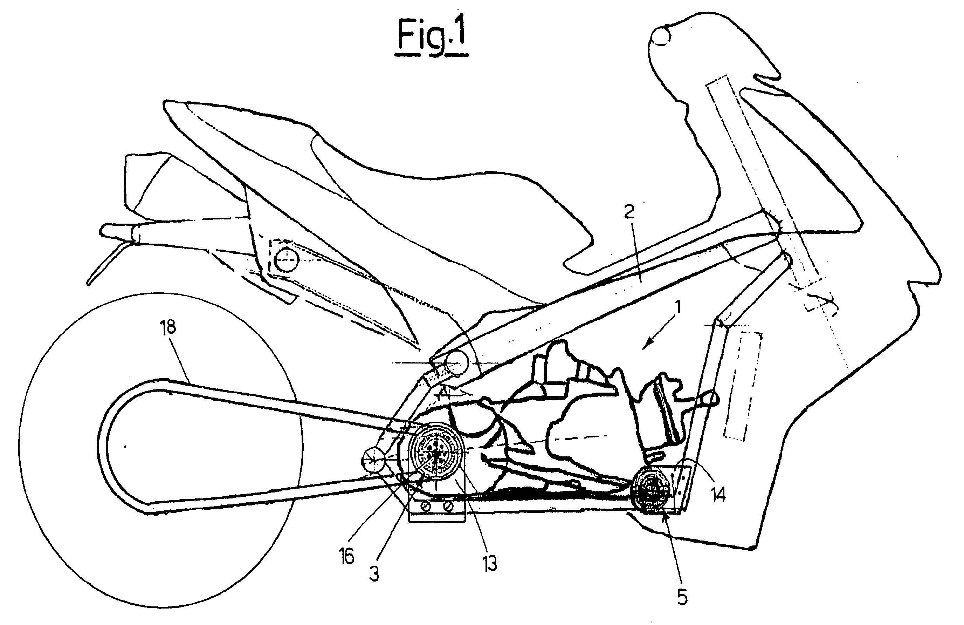

As shown in figure 1, thanks to the rear connection groups 3, 4, the engine group 1 is positioned in a central position with respect to the motor vehicle, unlike the solutions according to the prior art that foresee a position set back towards the rear part. More specifically, the engine group is positioned at the central part of the vehicle, in such a way reducing the formation of turning torques due to an increase in the distance between point of application of the weight force of the engine group 1 and centre of mass of the scooter.

In such a way a motor vehicle with a more compact structure and therefore less subjected to possible turning moments is obtained.

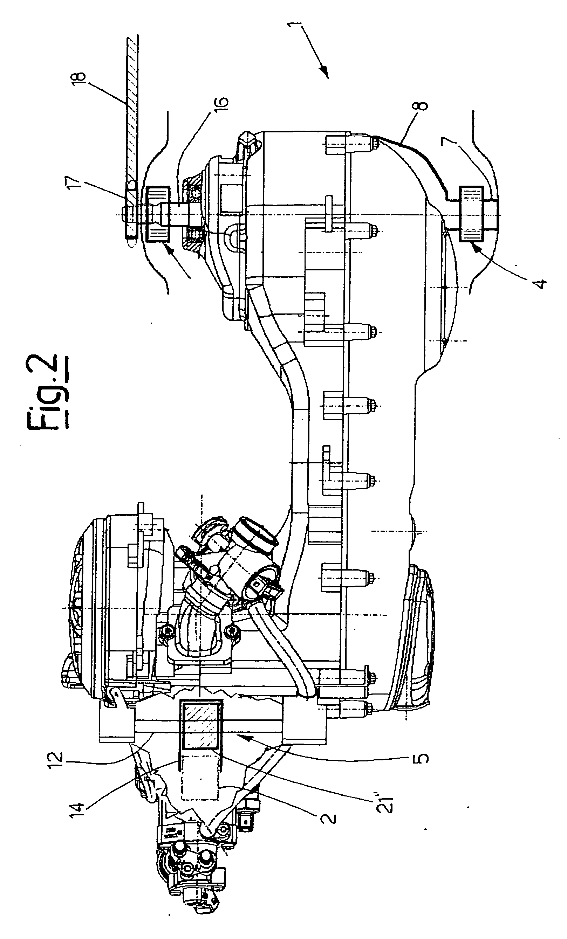

The connection group 3, as can be seen better in figure 2, is arranged laterally to the crankcase 8 at the drive shaft 16, whereas the remaining connection group 4 is again arranged at the drive shaft 16, but on the opposite side of the crankcase itself 8.

In particular, the connection group 3, again as can be seen in figure 2, is fitted directly onto the drive shaft 16 downstream of a transmission coil 17 of the motion to the chain 18.

On the opposite side of the crankcase 8, in a corresponding position, as stated previously, the other connection group 4 is arranged fixedly connected to the engine group 1 by means of a projecting pin 7 integral with the crankcase 8.

Although, in the illustrated figures, the two rear connection groups (3, 4) are foreseen at the drive shaft it is, however, possible to realise them distanced from it without departing from the scope of protection of the present patent.

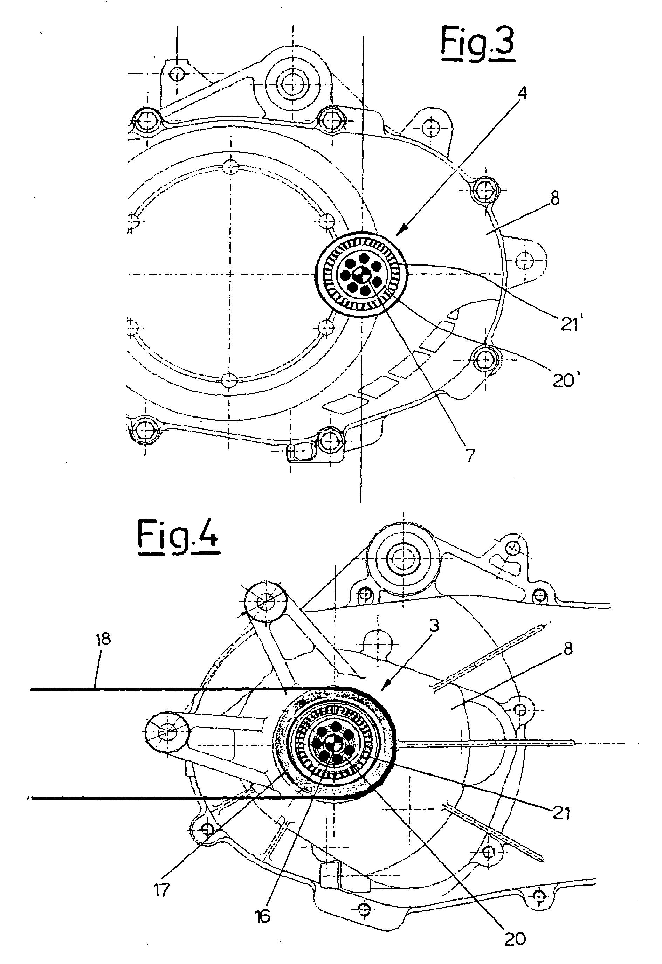

Figures 3 and 4 respectively show the two rear connection groups 3, 4 according to the present invention, each group 3, 4 comprising a roller unit 20, 20' and a silentblock 21, 21'.

The roller unit is the mechanical member used for the connection between the silentblock 21, 21' and the drive shaft 16 or the projecting pin 7.

For such a purpose, as better illustrated in figures 3 and 4, the roller unit foresees two concentric sleeves, made integral, respectively, with the silentblock 21, 21' and with the drive shaft 16 or with the pin 7 between which rolling rollers are arranged.

The silentblock, really responsible for the damping of vibrations, at least partially contains the roller unit and is fixedly connected to it by means of a forced coupling, alternatively by welding or another coupling system.

In an alternative embodiment, the connection groups can be made up of just the silentblock 21, 21' or just the roller units 20, 20'.

The connection groups 3, 4 are, in turn, coupled with support brackets 13 fixed to the frame so as to ensure exclusively movements of the engine group, substantially in the vertical plane.

A further alternative embodiment foresees that the rear connection groups 3, 4 consist of two articulations 25, 25' pivoted at one end to the frame 2 and at the remaining end to the engine group 1 so as to allow the movement of the engine only in the vertical plane, in other words opposing the belt pull on the horizontal plane.

In detail, the articulation 25, consisting of a connecting-rod, is pivoted at one end thereof to the frame 2 and at the remaining end on the drive shaft 16, whereas the articulation 25', also consisting of a connecting-rod, is pivoted at one end thereof to the frame 2 and at the remaining end on the pin 7.

The articulations 25, 25', respectively, can be pivoted on the drive shaft 16 and on the pin 7 directly or through the interposition of a silentblock or a roller unit.

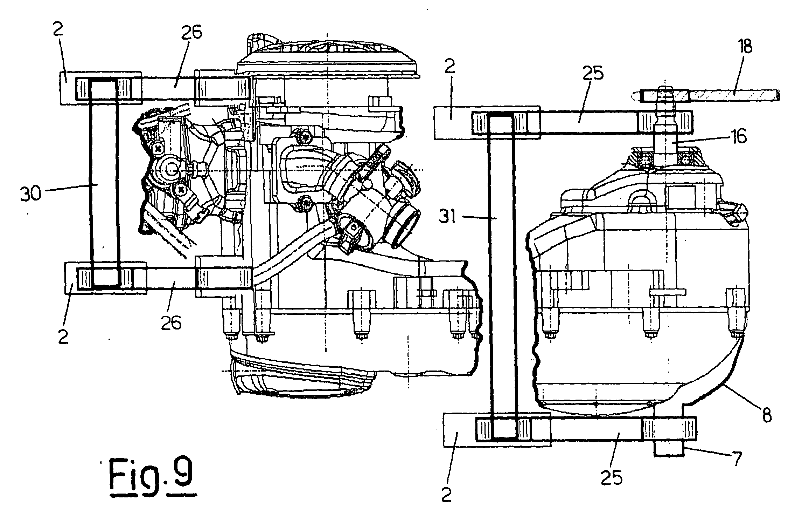

The two articulations or connecting-rods 25, 25' can also, but not necessarily, be connected together by the tube 31 to form a single articulated system, as shown in figure 9.

In a front position, as stated previously, the coupling system foresees a further connection group 5.

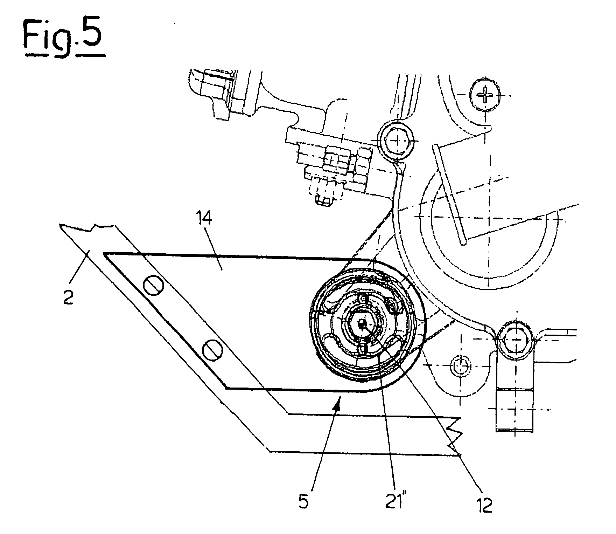

In particular, as can be seen in figures 1, 2 and 5, an anti-vibration silentblock 21" is foreseen as a front connection group 5, inserted on a transversal tube 12 integral with the engine group 1. The silentblock is in turn fixedly connected, through the support bracket 14, to the frame 2.

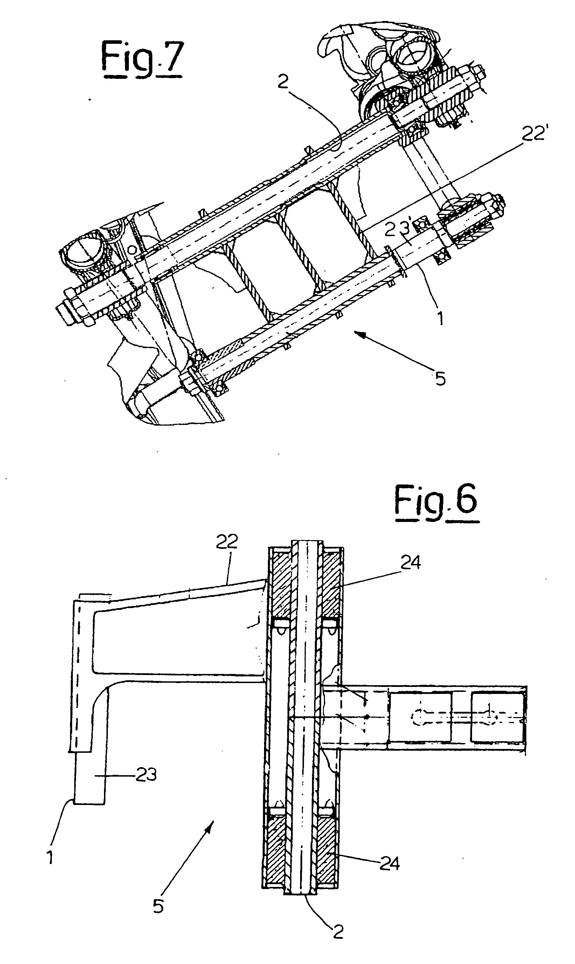

In an alternative embodiment, an oscillating arm 22 or a double oscillating arm 22' can be foreseen as front connection group 5. In the first case, shown in figure 6, the oscillating arm 22 is fixedly connected at one end to the engine group 1 and is pivoted, at the remaining end, to the frame 2.

In detail, to allow the coupling between engine group 1 and oscillating arm 22, a transversal tube 23 is foreseen integral with the engine group 1, whereas to assist the damping of vibrations two silentblocks 24 are foreseen between oscillating arm 22 and frame 2.

On the other hand, in the case of use of a double oscillating arm 22', shown in figure 7, it is pivoted at one end to a transversal tube 23', integral with the engine group 1, and at the remaining end to the frame 2.

According to another embodiment, not shown, the connection group 5 can comprise a shaped bracket pivoted at the engine group and at the frame at many points.

For such a purpose, to hinge the bracket to the frame one or more connecting-rods and at least one spring suspension are foreseen.

According to this embodiment, silentblocks can also be foreseen placed between spring suspension and shaped bracket.

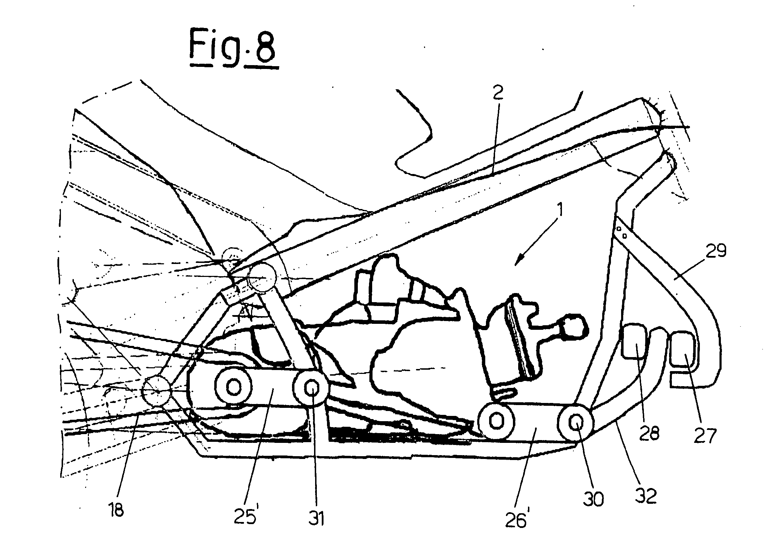

In figures 8 and 9 a further embodiment of the connection group 5 is described, in which a pair of articulations 26 and 26' is pivoted on the frame 2 to allow the attachment of the front part of the engine group 1 so as to eliminate the horizontal movements of the engine group.

The two articulations or connecting-rods 26, 26' can also, but not necessarily, be connected together by a tube 30 so as to form a single articulated system, as shown in figure 9.

The two connecting-rods 26, 26' extend with the projecting portion 32 to engage the two abutment buffers 27 and 28.

The two abutment buffers 27, 28 are supported and kept integral with the frame through the bracket 29.

The engagement of the projecting portion 32 with the buffers 27, 28 eliminates the possibility of rotation of the engine in the vertical plane.

Based upon the previous description, it can be seen that the fundamental advantage of the present invention is that of reducing the passage of vibrations from the engine to the vehicle.

The rear connections 3, 4 between frame and engine group 1 are, therefore, carried out directly through roller units and/or silentblocks and/or articulations allowing the reliability of the coupling to be increased and reducing phenomena of amplification of the vibrations. The silentblocks also allow an elastic coupling with respect to the frame.

The different radial, axial and torsional rigidities of the silentblocks and of the front connection group 5 allows the engine group to be left the freedom of movement necessary for limiting the passage of vibrations and for counteracting the movements that influence the riding of the vehicle.

Moreover, the coupling system according to the present invention allows there to be transmission and rear suspension arm not rigidly assembled to the engine group, as vice-versa happens in frame-engine group coupling systems according to the prior art.

The present invention has been described for illustrating and not limiting purposes, according to its preferred embodiments, but it should be understood that variations and/or modifications can be brought by men skilled in the art without departing from the relative scope of protection, as defined by the attached claims.

## Claims

1. A motor vehicle having a coupling system between frame (2) and engine group (1), said coupling system comprising at least one front connection group (5) and two rear connection groups (3, 4); said two rear connection groups (3, 4) being placed laterally on the opposite sides of said engine group (1) so as to couple with said frame (2) to exclusively allow movements of said engine group (1) substantially in the vertical plane of the motor vehicle, **characterised in that** said two rear connection groups (3, 4) are placed at the drive shaft (16) of said engine group (1), a rear connection group (3) being directly inserted on said drive shaft (16) and the other rear connection group (4) being inserted on a pin element (7) projecting from the engine group (1) on the opposite side to that of said drive shaft (16).

2. Motor vehicle according to claim 1, **characterised in that** each rear connection group (3, 4) comprises at least one roller unit device (20, 20').

3. Motor vehicle according to claim 1, **characterised in that** each rear connection group (3, 4) comprises at least one silentblock (21, 21').

4. Motor vehicle according to claim 1, **characterised in that** each rear connection group (3, 4) comprises at least one roller unit device (20, 20') and at least one silentblock (21, 21') coupled together.

5. Motor vehicle according to any one of the previous claims, **characterised in that** each rear connection group (3, 4) is coupled with the frame by means of a support bracket (13).

6. Motor vehicle according to claim 1, **characterised in that** each rear connection group (3, 4) comprises at least one articulation (25, 25') pivoted at said frame (2) and at said engine group (1).

7. Motor vehicle according to claim 6, **characterised in that** said at least one articulation (25, 25') comprises a connecting-rod.

8. Motor vehicle according to claims 6 and 7, **characterised in that** each articulation (25, 25') is connected to the other through a tube (30) to form a single articulated system.

9. Motor vehicle according to any one of the previous claims, **characterised in that** said front connection group (5) comprises at least one silentblock (21") inserted on a transversal tube (12) integral with the engine group (1).

10. Motor vehicle according to claim 9, **characterised in that** said front connection group (5) is coupled with said frame (2) through a support bracket (14) suitable for engaging said silentblock (21").

11. Motor vehicle according to any one of claims 1 to 8, **characterised in that** said front connection group (5) comprises at least one oscillating arm (22) fixedly connected to the engine group (1) and pivoted at the frame (2).

12. Motor vehicle according to any one of claims 1 to 8, **characterised in that** said front connection group (5) comprises at least one double oscillating arm (22') pivoted at one end to the engine group (1) and at the other end to the frame (2).

13. Motor vehicle according to any one of claims 1 to 8, **characterised in that** said front connection group (5) comprises at least two articulations (26, 26'), pivoted to the engine group (1) and to the frame (2), and at least one abutment buffer (27, 28) kept integral with said frame (2) through a bracket 29 fixed to said frame (2).

14. Motor vehicle according to claim 13, **characterised in that** said at least two articulations (26, 26') each comprise at least one connecting-rod (26 and 26') pivoted to the engine group (1) and to the frame (2) and in engagement with said at least one buffer (27, 28).

15. Motor vehicle according to any one of claims 13 or 14, **characterised in that** the articulations (26, 26') are connected together by means of a tube (31) to form a single articulated system.

## Patentansprüche

1. Motorfahrzeug mit einer Kopplungsanordnung zwischen Rahmen (2) und Motorbereich (1), wobei die Kopplungsanordnung mindestens einen Frontverbindungsbereich (5) und zwei hintere Verbindungsbereiche (3, 4) umfasst, wobei die zwei hinteren Verbindungsbereiche (3, 4) lateral auf den gegenüberliegenden Seiten des Motorbereichs (1) angeordnet sind, um so mit dem Rahmen (2) zu koppeln, um ausschließlich Bewegungen des Motorbereichs (1) im Wesentlichen in der Vertikalebene des Motorfahrzeugs zu ermöglichen, **dadurch gekennzeichnet, dass** die zwei hinteren Verbindungsbereiche (3, 4) an der Antriebswelle (16) des Motorbereichs (1) angeordnet sind, wobei ein hinterer Verbindungsbereich (3) direkt auf die Antriebswelle (16) aufgesteckt ist und der andere hintere Verbindungsbereich (4) auf ein Bolzenelement (7) aufgesteckt ist, welches von dem Motorbereich (1) auf der der Antriebswelle (16) gegenüberliegenden Seite absteht.

2. Motorfahrzeug nach Anspruch 1, **dadurch gekennzeichnet, dass** jeder der hinteren Verbindungsbereiche (3, 4) mindestens eine Rolleneinheitvorrichtung (20, 20') umfasst.

3. Motorfahrzeug nach Anspruch 1, **dadurch gekennzeichnet, dass** jeder hintere Verbindungsbereich (3, 4) mindestens einen Silentblock (21, 21') umfasst.

4. Motorfahrzeug nach Anspruch 1, **dadurch gekennzeichnet, dass** jeder hintere Verbindungsbereich (3, 4) mindestens eine Rolleneinheitvorrichtung (20, 20') und mindestens einen Silentblock (21, 21') umfasst, die zusammengekoppelt sind.

5. Motorfahrzeug nach einem der voranstehenden Ansprüche, **dadurch gekennzeichnet, dass** jeder hintere Verbindungsbereich (3, 4) mit dem Rahmen mittels einer Halteklammer (13) gekoppelt ist.

6. Motorfahrzeug nach Anspruch 1, **dadurch gekennzeichnet, dass** jeder hintere Verbindungsbereich (3, 4) mindestens ein Gelenk (25, 25') umfasst, welches drehbar an dem Rahmen (2) und an dem Motorbereich (1) gelagert ist.

7. Motorfahrzeug nach Anspruch 6, **dadurch gekennzeichnet, dass** das mindestens eine Gelenk (25, 25') eine Verbindungsstange umfasst.

8. Motorfahrzeug nach den Ansprüchen 6 und 7, **dadurch gekennzeichnet, dass** jedes Gelenk (25, 25') mit dem anderen durch ein Rohr (30) verbunden ist, um eine einzige gelenkige Anordnung zu bilden.

9. Motorfahrzeug nach einem der voranstehenden Ansprüche, **dadurch gekennzeichnet, dass** der Frontverbindungsbereich (5) mindestens einen Silentblock (21") umfasst, welcher auf ein Querrohr (12) aufgesteckt ist, welches mit dem Motorbereich (1) ein Ganzes bildet.

10. Motorfahrzeug nach Anspruch 9, **dadurch gekennzeichnet, dass** der Frontverbindungsbereich (5) mit dem Rahmen (2) durch eine Halteklammer (14) gekoppelt ist, um mit dem Silentblock (21") in Eingriff zu stehen.

11. Motorfahrzeug nach einem der Ansprüche 1 bis 8, **dadurch gekennzeichnet, dass** der Frontverbindungsbereich (5) mindestens einen oszillierenden Arm (22) umfasst, welcher fest mit dem Motorbereich (1) verbunden und drehbar an dem Rahmen (2) gelagert ist.

12. Motorfahrzeug nach einem der Ansprüche 1 bis 8, **dadurch gekennzeichnet, dass** der Frontverbindungsbereich (5) mindestens einen doppelten oszillierenden Arm (22') umfasst, welcher an einem Ende an dem Motorenbereich (1) und an dem anderen Ende an dem Rahmen (2) drehbar gelagert ist.

13. Motorfahrzeug nach einem der Ansprüche 1 bis 8, **dadurch gekennzeichnet, dass** der Frontverbindungsbereich (5) mindestens zwei Gelenke (26, 26') umfasst, welche an dem Motorbereich (1) und dem Rahmen (2) drehbar gelagert sind, und mindestens einen Gegenlagerpuffer (27, 28), welcher mit dem Rahmen (2) durch eine Klammer (29), die an dem Rahmen (2) fixiert ist, integral gehalten ist.

14. Motorfahrzeug nach Anspruch 13, **dadurch gekennzeichnet, dass** die mindestens zwei Gelenke (26, 26') jeweils mindestens eine Verbindungsstange (26, 26') umfassen, die an dem Motorbereich (1) und dem Rahmen (2) drehbar gelagert sind und mit dem mindestens einen Puffer (27, 28) in Eingriff stehen.

15. Motorfahrzeug nach einem der Ansprüche 13 oder 14, **dadurch gekennzeichnet, dass** die Gelenke (26, 26') miteinander mittels eines Rohrs (31) verbunden sind, um eine einzige gelenkige Anordnung zu bilden.

## Revendications

1. Véhicule à moteur ayant un système de couplage entre un cadre (2) et un groupe moteur (1), ledit système de couplage comprenant au moins un groupe de connexion avant (5) et deux groupes de connexion arrière (3, 4), lesdits deux groupes de connexion arrière (3, 4) étant placés latéralement sur les côtés opposés dudit groupe moteur (1) pour se coupler audit cadre (2) pour permettre exclusivement les mouvements dudit groupe moteur (1) substantiellement dans le plan vertical du véhicule à moteur, **caractérisé en ce que** lesdits deux groupes de connexion arrière (3, 4) sont placés au niveau de l'arbre d'entraînement (16) dudit groupe moteur (1), un groupe de connexion arrière (3) étant directement inséré sur ledit arbre d'entraînement (16) et l'autre groupe de connexion arrière (4) étant inséré sur un élément formant axe (7) qui fait saillie depuis le groupe moteur (1) du côté opposé à celui dudit arbre d'entraînement (16).

2. Véhicule à moteur selon la revendication 1, **caractérisé en ce que** chaque groupe de connexion arrière (3, 4) comprend au moins un dispositif formant unité de roulement (20, 20').

3. Véhicule à moteur selon la revendication 1, **caractérisé en ce que** chaque groupe de connexion arrière (3, 4) comprend au moins un support élastique (21, 21').

4. Véhicule à moteur selon la revendication 1, **caractérisé en ce que** chaque groupe de connexion arrière (3, 4) comprend au moins un dispositif formant unité de roulement (20, 20') et au moins un support élastique (21, 21') couplés ensemble.

5. Véhicule à moteur selon l'une quelconque des revendications précédentes, **caractérisé en ce que** chaque groupe de connexion arrière (3, 4) est couplé au cadre au moyen d'une patte de support (13).

6. Véhicule à moteur selon la revendication 1, **caractérisé en ce que** chaque groupe de connexion arrière (3, 4) comprend au moins une articulation (25, 25') montée à pivotement sur ledit cadre (2) et sur ledit groupe moteur (1).

7. Véhicule à moteur selon la revendication 6, **caractérisé en ce que** ladite au moins une articulation (25, 25') comprend une biellette.

8. Véhicule à moteur selon les revendications 6 et 7, **caractérisé en ce que** chaque articulation (25, 25') est connectée à l'autre par l'intermédiaire d'un tube (30) pour former un seul système articulé.

9. Véhicule à moteur selon l'une quelconque des revendications précédentes, **caractérisé en ce que** ledit groupe de connexion avant (5) comprend au moins un support élastique (21 ") inséré sur un tube transversal (12) intégré au groupe moteur (1).

10. Véhicule à moteur selon la revendication 9, **caractérisé en ce que** ledit groupe de connexion avant (5) est couplé audit cadre (2) par l'intermédiaire d'une patte de support (14) prévue pour s'engager avec ledit support élastique (21").

11. Véhicule à moteur selon l'une quelconque des revendications 1 à 8, **caractérisé en ce que** ledit groupe de connexion avant (5) comprend au moins un bras oscillant (22) connecté de manière fixe au groupe moteur (1) et monté à pivotement sur le cadre (2).

12. Véhicule à moteur selon l'une quelconque des revendications 1 à 8, **caractérisé en ce que** ledit groupe de connexion avant (5) comprend au moins un double bras oscillant (22') monté à pivotement à une extrémité au groupe moteur (1) et à l'autre extrémité au cadre (2).

13. Véhicule à moteur selon l'une quelconque des revendications 1 à 8, **caractérisé en ce que** ledit groupe de connexion avant (5) comprend au moins deux articulations (26, 26'), montées à pivotement sur le groupe moteur (1) et sur le cadre (2), et au moins un tampon de butée (27, 28) assujetti audit cadre (2) par l'intermédiaire d'un support (29) fixé audit cadre (2).

14. Véhicule à moteur selon la revendication 13, **caractérisé en ce que** lesdites au moins deux articulations (26, 26') comprennent chacune au moins une biellette (26 et 26') montée à pivotement sur le groupe moteur (1) et sur le cadre (2) et en contact avec ledit au moins un tampon (27, 28).

15. Véhicule à moteur selon l'une quelconque des revendications 13 et 14, **caractérisé en ce que** les articulations (26, 26') sont reliées l'une à l'autre au moyen d'un tube (31) pour former un seul système articulé.
